# FASCICULE DE BREVET EUROPEEN

(11) **EP 0 677 017 B1**
(45) Date de publication et mention de la délivrance du brevet: **28.08.1996**
(21) Numéro de dépôt: 94904202.2
(22) Date de dépôt: 05.01.1994
(51) Int. Cl.: B65G 25/10, B65G 25/08, B24C 9/00

(54) **RACLEUR, CHASSIS DE RACLAGE AINSI EQUIPE, INSTALLATION DE TRANSFERT DE MATIERES ET CABINE CELLULAIRE DEPLA ABLE**
KRATZER, KRATZERRAHMEN AUSGESTATTET MIT KRATZER, MATERIALFÖRDERVORRICHTUNG UND VERSTELLBARE ZELLULARE KABINE
SCRAPER, SCRAPER FRAME FITTED THEREWITH, MATERIAL TRANSFER PLANT AND MOVABLE CELLULAR UNIT

(30) Priorité: 06.01.1993 FR 9300065
(43) Date de publication de la demande: 18.10.1995
(73) Titulaire: GETRASUR, F-77220 Presles en Brie (FR)
(72) Inventeur: DUPUIT, Gérard, F-77220 Presles-en-Brie (FR)
(74) Mandataire: Derambure, Christian
(86) Numéro de dépôt international: FR9400013
(87) Numéro de publication internationale: WO9415861

(56) Documents cités:
- WO-A-91/13014
- DE-C- 765 898
- FR-A- 2 074 586
- FR-A- 2 160 062
- FR-A- 2 343 672
- FR-A- 2 380 107
- FR-A- 2 579 571

## Description

La présente invention concerne un racleur destiné notamment au transfert de matières pulvérulentes ou granuleuses.

Elle concerne également un châssis de raclage comportant une série de racleurs selon l'invention et dans lequel l'entrée des matières à transférer est effectuée latéralement au châssis de raclage.

De plus, la présente invention concerne une installation de transfert de matières granuleuses ou pulvérulentes, notamment pour la récupération de matières de décapage, telles que du sable, mettant en oeuvre des châssis de raclage selon l'invention.

Enfin, cette invention a pour objet une cabine cellulaire déplaçable pour site extérieur comprenant une installation de transfert de matières conforme à l'invention.

Dans de nombreuses industries, certaines étapes de fabrication nécessitent de disposer au sol des installations de transfert de matières pulvérulentes ou granuleuses en vue de récupérer celles-ci ou de les éliminer.

On connaît déjà par le brevet français FR 2 655 031 au nom de la Demanderesse un racleur comportant une armature métallique en forme de peigne et une lame flexible en élastomère collée contre une face d'une traverse supérieure de l'armature. Ce brevet décrit également un châssis de raclage comportant plusieurs racleurs disposés transversalement entre deux longerons parallèles et animés d'un mouvement de va-et-vient afin de transférer les matières, telles que du sable de décapage, contenues dans des couloirs de récupération.

Ces racleurs ne sont actifs que dans un sens de déplacement, lorsque la matière déplacée pousse la lame flexible contre l'armature métallique.

Les châssis de raclage sont disposés parallèlement sur le sol des installations utilisatrices. A leur extrémité de sortie de matières, ils débouchent dans un couloir transversal équipé d'un châssis de raclage identique et situé sous les couloirs longitudinaux de sorte que la matière accumulée aux extrémités tombe dans le couloir transversal. Ce dernier débouche généralement au pied d'un dispositif de recyclage, tel qu'un élévateur à godets.

De telles installations nécessitent d'importants travaux de génie civil, et notamment de creuser une fosse dans le sol afin de disposer les couloirs transversaux à un niveau inférieur, sous les couloirs longitudinaux.

De même, le pied de l'élévateur doit être enfoncé dans le sol de manière à être situé sous les couloirs transversaux.

La présente invention a pour but de remédier aux inconvénients précités des installations de transfert à mouvement alternatif des matières pulvérulentes ou granuleuses. Elle permet notamment de simplifier la mise en place de ces installations et de rendre leurs utilisation beaucoup plus flexible.

Le racleur visé par l'invention est disposé entre deux longerons parallèles et comprend une armature métallique en forme de peigne à dents dirigés vers le bas et une lame flexible couvrant lesdites dents et collée contre une face d'une traverse supérieure de l'armature.

Selon l'invention, le racleur est caractérisé en ce que l'armature métallique possède une première partie sensiblement perpendiculaire auxdits longerons et au moins une seconde partie solidaire d'une extrémité de la première partie et formant un coude avec la première partie, la lame flexible étant collée contre une face dirigée vers l'intérieur du coude de l'armature.

La structure coudée du racleur permet de déplacer en biais, à l'intérieur du châssis de raclage, les matières granuleuses ou pulvérulentes et de ramener la matière en regard de la première partie de l'armature, perpendiculaire aux longerons.

Le racleur selon l'invention permet donc d'éliminer l'excès de matières sur les côtés du châssis de raclage.

Selon un deuxième aspect de l'invention, un châssis de raclage comprend deux longerons parallèles entre lesquels sont disposés des racleurs conformes à l'invention et animés d'un mouvement de va-et-vient, les matières à transférer étant introduites latéralement dans ledit châssis de raclage, sous au moins un des longerons.

Le châssis de raclage est caractérisé en ce qu'une seconde partie de l'armature coudée de chaque racleur est adjacente au longeron sous lequel les matières à transférer sont introduites, la face dirigée vers l'intérieur du coude de l'armature étant en regard de l'extrémité de sortie des matières dudit châssis.

Ainsi, le châssis de raclage selon l'invention permet de transférer les matières dans une direction perpendiculaire à la direction d'entrée des produits. Grâce à la structure courbée des racleurs et à leur disposition dans les longerons parallèles, les matières introduites sous un longeron, sur les côtés du châssis de raclage, sont rapidement déviées vers le centre du châssis. Ainsi, il n'y a pas d'accumulation des matières le long des longerons du châssis de raclage lors du changement de direction du transfert des matières.

Selon un troisième aspect de l'invention, l'installation de transfert des matières, notamment de matières de décapage granuleuses ou pulvérulentes, comprend une première série de châssis parallèles de raclage comportant deux longerons parallèles animés d'un mouvement de va-et-vient et entre lesquels sont disposés tranversalement des racleurs droits, et un second châssis de raclage conforme à l'invention.

Selon l'invention, cette installation est caractérisée en ce que les châssis de raclage de ladite première série débouchent latéralement au niveau du second châssis de raclage, les racleurs droits de la première série de châssis de raclage possédant une armature métallique droite en forme de peigne à dents dirigée vers le bas, une lame flexible couvrant lesdites dents et collée sur une face d'une traverse supérieure de l'armature et une aile raidisseuse sensiblement perpendiculaire à la traverse supérieure et s'étendant à l'opposé de la lame flexible dans les racleurs d'extrémité disposés en regard du second châssis de raclage.

L'installation de transfert des matières de décapage selon l'invention permet donc une disposition au même niveau des châssis de raclage longitudinaux et transversaux. Grâce à l'invention, il n'est plus nécessaire de procéder à des travaux coûteux et fastidieux de génie civil pour installer les châssis de raclage.

De plus, ces derniers étant disposés directement sur le sol, leur agencement peut être adapté aisément suivant les besoins des ateliers de fabrication.

Selon un quatrième aspect de l'invention, une cabine cellulaire déplaçable comprend une installation de transfert de matières telle que décrite ci-dessus, les châssis de raclage de la première série et ledit second châssis de raclage comportant des profilés externes immobiles entre lesquels s'étendent parallèlement les longerons.

Selon l'invention, les profilés externes comportent des moyens de fixation adaptés à fixer de manière libérable ladite cabine cellulaire s'étendant au-dessus des châssis de raclage, la cabine comportant une ouverture adaptée au passage d'une portion d'extrémité de sortie du second châssis de raclage.

Cette cabine cellulaire constitue donc un ensemble de décapage qui peut être installé sans nécessiter de fondations, à l'extérieur, par exemple à proximité d'ateliers de fabrication ou de chantiers. Elle est facilement mobile et peut être déplacée de site en site, suivant les besoins d'utilisation.

D'autres avantages et particularités de l'invention apparaîtront encore dans la description ci-après.

Aux dessins annexés, donnés à titre d'exemples non limitatifs:
- la figure 1 est une vue d'ensemble d'une installation de récupération des matières selon l'invention;
- la figure 2 est une vue de face d'un racleur selon l'invention;
- la figure 3 est une vue de dessus d'un racleur selon l'invention;
- la figure 4 est une vue de dessus d'un racleur d'extrémité du châssis de raclage selon l'invention;
- la figure 5 est une vue tronquée en plan au sol de la cabine cellulaire selon l'invention;
- la figure 6 est une vue en coupe partielle selon VI-VI à la figure 5;
- la figure 7 est une vue en coupe selon VII-VII à la figure 5;
- la figure 8 est une vue en coupe partielle selon VIII-VIII à la figure 5;
- la figure 9 est une vue en coupe partielle selon IX-IX à la figure 8;
- la figure 10 est une vue en coupe tronquée selon X-X à la figure 5;
- la figure 11 est une vue en perspective d'une cabine cellulaire de l'ensemble de décapage; et
- la figure 12 est une vue en perspective d'une cellule de la cabine de la figure 11.

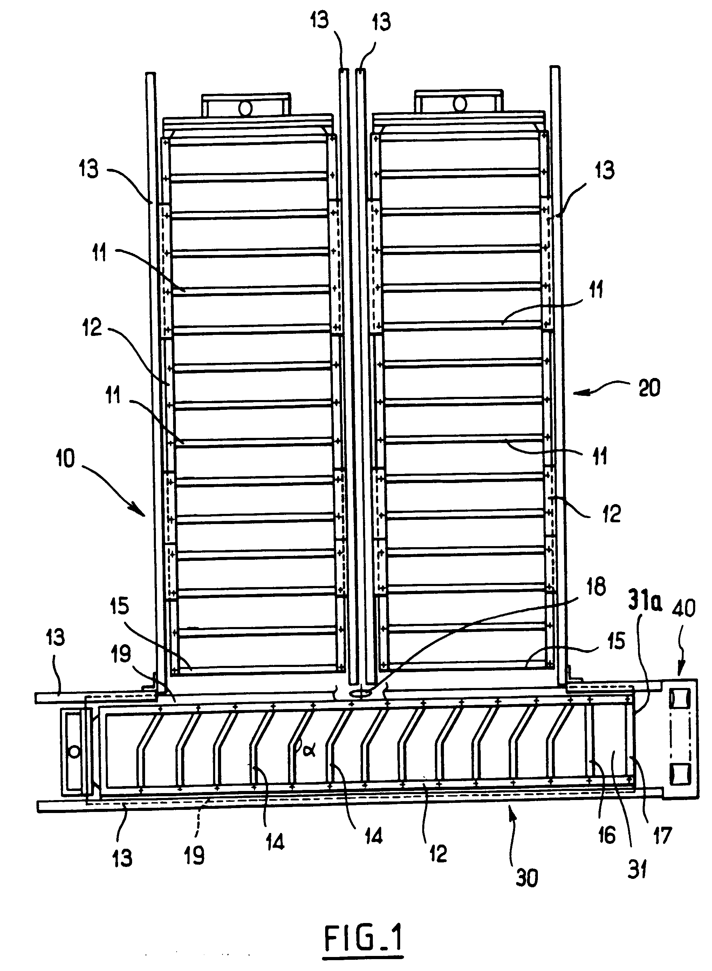

Comme représenté figure 1, le racleur 14 selon l'invention est disposé entre deux longerons parallèles 12.

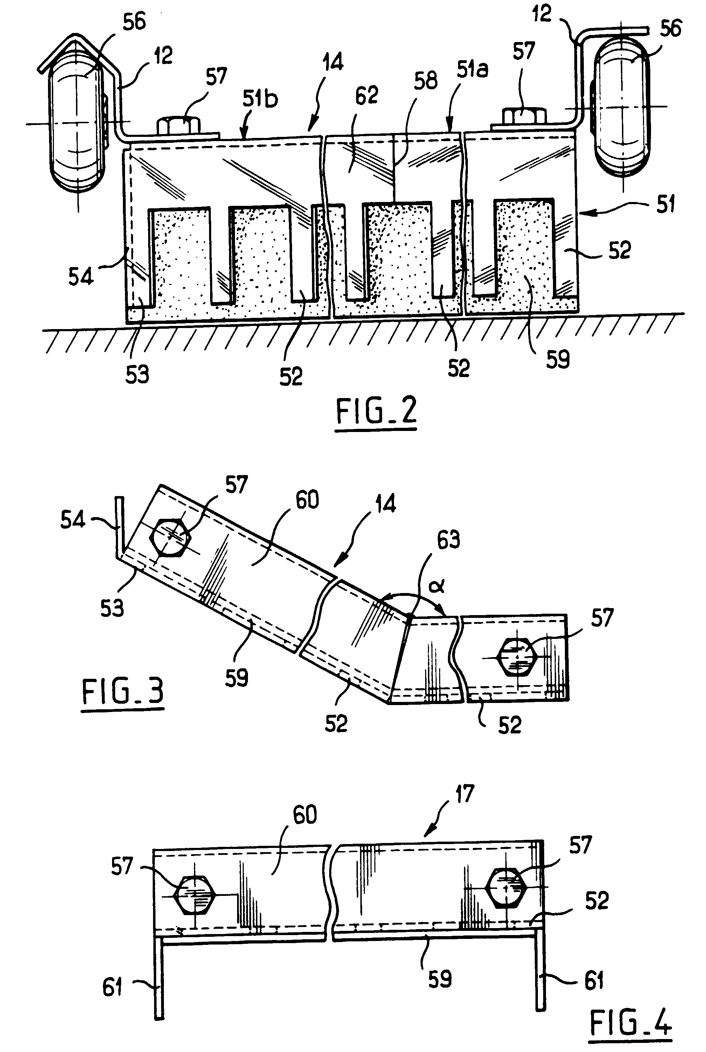

Le racleur 14 comprend une armature métallique 51, représentée figures 2 et 3, en forme de peigne à dents 52 dirigées vers le bas et une lame flexible 59 couvrant les dents 52. La lame 59 peut être en élastomère ou en caoutchouc. Elle est collée contre une face de la traverse supérieure 62 de l'armature 51. Dans le cas où la lame 59 est en élastomère, la colle utilisée est de préférence une colle cyanoacrylate.

Le racleur 14 possède une première partie 51a d'armature qui est perpendiculaire aux longerons 12 et une seconde partie 51b d'armature qui est solidaire d'une extrémité de la première partie 51a et qui forme un coude avec celle-ci.

Dans l'exemple de réalisation représenté figure 3, les deux parties 51a et 51b de l'armature métallique 51 forment un angle obtus α égal à environ 150°. La valeur de l'inclinaison de la seconde partie 51b de l'armature par rapport à la première partie 51a résulte d'un compromis entre la nécessité d'avoir une inclinaison élevée pour dévier rapidement la matière vers la première partie 51a de l'armature et le souci de ne pas augmenter exagérément la longueur du pas entre chaque racleur 14 afin d'avoir un nombre suffisant de racleurs 14 pour un bon transfert des matières dans le châssis de raclage 30.

La lame flexible 59 est collée contre la face dirigée vers l'intérieur du coude de l'armature 51, c'est-à-dire la face concave de l'armature, de sorte que le sens actif du racleur 14 en mouvement de va-et-vient corresponde au sens de déplacement du racleur dans lequel la face d'attaque du racleur est la face concave.

La seconde partie 51b de l'armature possède une aile 54 solidaire de son extrémité opposée à la première partie 51a. Cette aile 54 est parallèle aux longerons 12 et s'étend au-delà de la lame flexible 59. Cette aile 54 a un rôle de bord tranchant et permet, à chaque mouvement de va-et-vient du racleur, d'empêcher les matières d'être refoulées sous le longeron 12 et de guider celles-ci vers le racleur 14. Cette aile 54 peut avoir une épaisseur de 2,5 mm environ et s'étendre d'une longueur de 20 mm à partir de l'extrémité de l'armature 51. Cette aile 54 permet également le maintien de la lame flexible 59 contre l'armature 51 en empêchant les matières de pénétrer latéralement entre l'armature 51 et la lame flexible 59.

L'armature métallique 51 en forme de peigne possède des dents 52, 53 à ses extrémités afin d'éviter notamment qu'à chaque retour du racleur 14, succédant à un déplacement actif de celui-ci, la lame flexible 59 ne soit soulevée par les matières introduites latéralement dans le châssis de raclage 30.

Les dents 52 ont une largeur de 8 mm et sont espacées de 25 mm environ. De préférence, la dent d'extrémité 53 adjacente à l'aile 54 a une largeur légèrement supérieure aux autres dents 52, égale à environ 9 mm.

Le racleur 14 a donc ainsi une partie d'extrémité formée par l'aile 54 et la dent d'extrémité 53, qui est renforcée dans la zone d'entrée des matières à transférer, c'est-à-dire dans la partie du châssis de raclage où les matières sont présentes en plus grande quantité.

Les première 51a et seconde 51b parties de l'armature 51 sont en contact dans un plan vertical 58 situé entre deux dents 52 du peigne.

La lame flexible 59 épouse ainsi correctement la face concave de l'armature métallique 51.

Comme représenté figure 3, l'armature métallique 51 possède en outre une aile raidisseuse 60 sensiblement perpendiculaire à la traverse supérieure 62 et s'étendant au-dessus du bord de la lame flexible 59 adjacent à la traverse supérieure de l'armature.

Cette aile raidisseuse 60 possède des moyens de fixation 57 aux longerons parallèles 12. Le racleur 14 peut ainsi être solidarisé au moyen d'un système vis-écrou aux deux longerons parallèles 12. L'aile raidisseuse 60 est également solidifiée au niveau du plan vertical de contact 58 des deux parties 51a et 51b de l'armature par un point de soudure 63.

Les racleurs 14 sont disposés entre deux longerons 12 parallèles pouvant être déplacés en mouvement de va-et-vient sur des galets 56. Le mouvement alternatif est obtenu de manière connue grâce à un motoréducteur et une bielle (non représentés). Le montage des galets 56 sur les profilés 13 est réalisé également de manière connue par l'intermédiaire de montures 19 fixées aux profilés 13 qui sont posés sur le sol et est décrit en détail dans le brevet FR-2 655 031 au nom de la Demanderesse.

La seconde partie 51b de chaque racleur 14 est adjacente au longeron 12 sous lequel les matières à transférer sont introduites, la face dirigée vers l'intérieur du coude de l'armature 51 étant en regard de l'extrémité 31 de sortie des matières du châssis de raclage 30.

L'installation de transfert de matières représentée figure 1, comprend deux châssis longitudinaux de raclage 10 et 20 parallèles. Chaque châssis 10, 20 comporte deux longerons parallèles 12 entre lesquels sont disposés transversalement des racleurs droits 11, 15 animés d'un mouvement de va-et-vient.

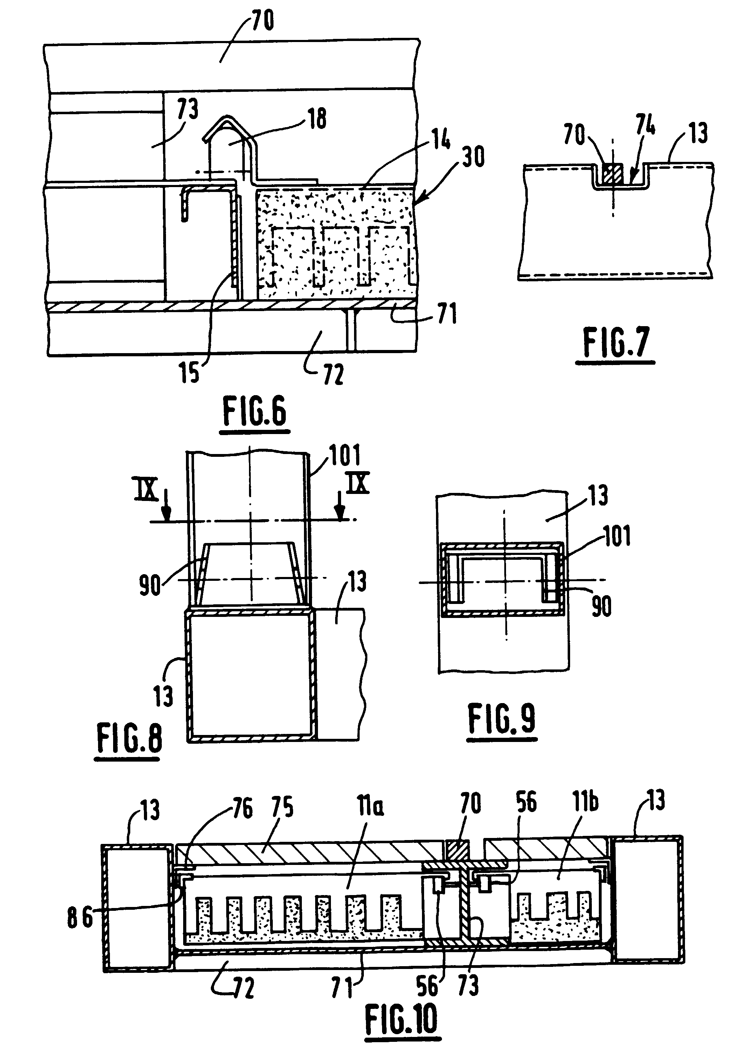

L'installation comporte également un châssis de raclage 30 transversal au niveau duquel débouchent latéralement les châssis de raclage longitudinaux 10 et 20. Le châssis de raclage transversal 30 comporte des racleurs 14 à armature coudée disposés entre les longerons 12 sur les portions du châssis de raclage transversal 30 dans lesquelles débouchent les châssis de raclage longitudinaux 10 et 20. Ces derniers comprennent des racleurs droits 11, 15 constitués de manière connue d'une armature métallique droite en forme de peigne à dents dirigées vers le bas, d'une lame flexible couvrant les dents du peigne et collée sur une face d'une traverse supérieure de l'armature et une aile raidisseuse sensiblement perpendiculaire à la traverse supérieure. Cette aile raidisseuse s'étend à l'opposé de la lame flexible dans les racleurs d'extrémité 15 disposés en regard du châssis de raclage transversal 30, comme illustré à la figure 6.

Le profilé 13 du châssis de raclage transversal 30 s'interrompt en regard des châssis de raclage longitudinaux 10 et 20 de manière à ne pas empêcher le transfert des matières au niveau du sol à l'intersection des châssis de raclage longitudinaux 10, 20 et du châssis de raclage transversal 30. Seule la monture 19 se prolonge sur toute la longueur du châssis de raclage latéral. Cette monture 19 est suspendue au-dessus du niveau du sol, par ses extrémités au profilé 13 interrompu et est supporté par un galet intermédiaire 18 placé entre les deux châssis de raclage longitudinaux 10, 20, dans une zone où les matières ne sont pas présentes.

Du fait de la structure particulière décrite ci-dessus des racleurs d'extrémité 15 des châssis de raclage longitudinaux, l'action du racleur 15 sur les matières à transférer a lieu jusque sous la monture 19. Les matières ainsi acheminées sont ensuite emportées par les ailes 54 formant un bord tranchant des racleurs 14 du châssis de raclage transversal et sont ensuite déviées grâce à la forme coudée des armatures 51 des racleurs 14.

Le châssis de raclage transversal 30 débouche au niveau du pied d'un élévateur 40, du type élévateur à godets. Cet élévateur permet de récupérer les matières transférées par l'installation de raclage et de les recycler éventuellement.

Le châssis de raclage transversal 30 possède à une portion d'extrémité 31 de sortie des matières, une série de racleurs droits 16, 17 comportant une armature métallique en forme de peigne à dents dirigées vers le bas, une lame flexible couvrant ces dents et collée contre une face de la traverse supérieure de l'armature, et une aile raidisseuse sensiblement perpendiculaire à la traverse supérieure.

Grâce aux racleurs coudés 14 et bien que l'alimentation en matières du châssis de raclage transversal 30 soit réalisée par un côté de ce châssis 30, les matières sont réparties uniformément dans la largeur du châssis de raclage 30 à proximité de son extrémité 31a de sortie des matières. La portion d'extrémité 31 peut donc être équipée de racleurs droits 16 et 17.

Le racleur d'extrémité 17, illustré figure 4, possède une aile raidisseuse 60 s'étendant à l'opposé de la lame flexible 59 et l'armature 51 de ce racleur d'extrémité 17 comprend à ses extrémités deux ailes 61 parallèles aux longerons 12 et s'étendant au-delà de la lame flexible 59.

Ces ailes 61 jouent un rôle de gaveur pour l'élévateur 40 et évitent qu'il n'y ait un bourrage des matières au pied de l'élévateur 40.

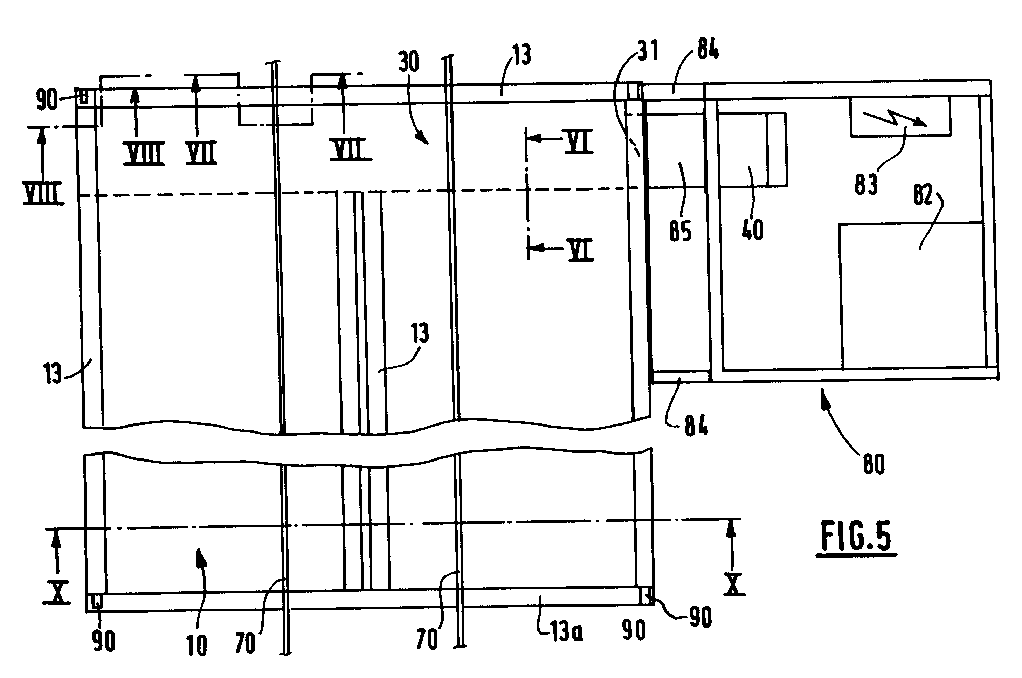

Comme illustré à la figure 5, la cabine cellulaire comprend une installation de transfert de matières, telle que décrite ci-dessus, comportant deux ou plusieurs châssis de raclage longitudinaux 10, 20 et un châssis de raclage transversal 30 équipé des racleurs courbés 14 conformes à la présente invention.

Chaque châssis de raclage 10, 20 et 30 comporte des profilés 13, 13a, externes immobiles entre lesquels s'étendent les longerons 12.

Comme illustré à la figure 1, des profilés 13 s'étendent parallèlement aux longerons 12 et sont adaptés à supporter, par l'intermédiaire d'une monture 19, des galets permettant la translation en va-et-vient des longerons par rapport aux profilés 13.

Un profilé 13a, disposé transversalement aux châssis de raclage longitudinaux 10 et 20, est adapté à fermer l'extrémité de ces châssis 10, 20, opposée au châssis de raclage transversal 30.

Selon l'invention, ces profilés externes 13, 13a comportent des moyens de fixation 90 adaptés à fixer de manière libérable une cabine 100 s'étendant au-dessus des châssis de raclage 10, 20 et 30.

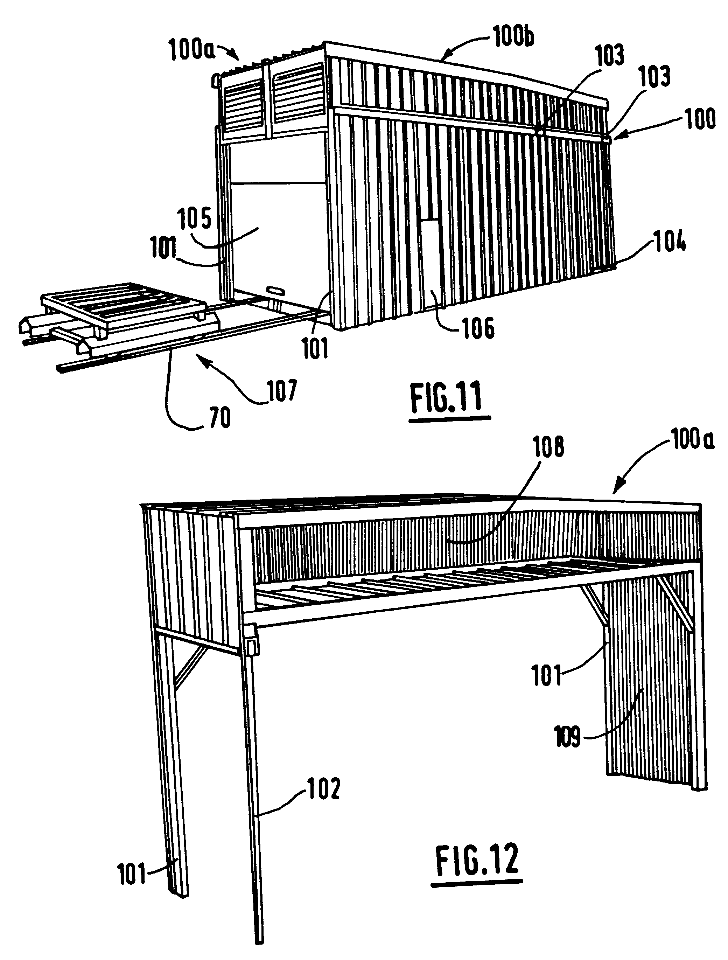

Cette cabine, telle qu'illustrée à la figure 11, comporte une ouverture 104 adaptée au passage d'une portion d'extrémité de sortie 31 du second châssis de raclage 30.

La cabine 100 peut donc être directement montée sur l'installation de transfert de matières, sans qu'il soit nécessaire de réaliser au préalable des fondations.

Un tel ensemble de décapage peut donc être disposé sans inconvénient à l'extérieur, à proximité d'une usine ou chantier, pour réaliser le sablage ou le grenaillage de diverses pièces.

La cabine cellulaire étant aisément démontable, son transfert d'un lieu à un autre peut être effectué sans problème, ni transport exceptionnel, etc.

A titre indicatif, quatre camions ou containers sont nécessaires pour déplacer une telle cabine cellulaire et la durée de montage est approximativement de quatre jours.

La cabine cellulaire comporte au moins un rail 70 sensiblement parallèle aux longerons 12 de la première série de châssis de raclage 10, 20 et adapté à supporter en translation un dispositif formant support 107 d'un produit à traiter dans l'ensemble de décapage.

De préférence, la cabine comporte une paire de rails 70 sur laquelle peut se déplacer un chariot 107.

Comme représenté à la figure 7, des encoches 74 sont ménagées sur la partie supérieure des profilés 13, 13a transversaux aux rails 70 pour permettre le passage de ces derniers.

La cabine 100 comporte de plus sur sa face avant une ouverture qui peut être fermée de manière classique par une porte 105. Cette ouverture est adaptée au passage du chariot 107 coulissant sur les rails 70. La cabine peut également comporter une ouverture sur sa face arrière pour permettre au chariot 107 de traverser la cabine, et éventuellement de transporter le produit après décapage jusqu'à un autre poste de traitement.

Un profilé de support 73 s'étend parallèlement à et entre les longerons 12 de chaque châssis de raclage 10, 20 de la première série de châssis longitudinaux. Ce profilé de support 73 est adapté à supporter un rail 70.

Comme illustré à la figure 10, ce profilé 73 peut avoir une section transversale en forme de "I". Les rails 70 ainsi supportés sont suffisamment éloignés du plancher pour passer au-dessus des racleurs 11, 14, 15 mobiles et ne pas gêner leur déplacement.

Des racleurs droits 11a et 11b s'étendent de manière transversale respectivement entre un profilé externe 13 et le profilé de support 73 et entre l'autre profilé externe 13 et le profilé de support 73.

Les racleurs 11a et 11b sont disposées ainsi de part et d'autre du profilé de support 73, les galets 56, permettant le mouvement en va-et-vient des racleurs 11a et 11b solidaires de longerons 12, étant fixés sur les profilés 13 et le profilé de support 73, comme décrit précédemment en référence à la figure 3.

L'ensemble des châssis de raclage peut être recouvert par des plaques formant caillebotis 75 pour permettre la circulation des opérateurs à l'intérieur de la cabine 100. Des éléments de support 76, fixés aux montants 13, permettent de supporter ces caillebotis 75.

Le plancher 71 des châssis de raclage comporte des nervures 72 en saillie permettant de renforcer de manière classique la structure.

Comme illustré aux figures 8 et 9, les moyens de fixation 90 de la cabine 100 sur les châssis de raclage 10, 20 et 30 sont constitués de pièces formant téton 90 sur lesquels viennent s'enfoncer des montants 101 de la cabine 100.

Un système vis-écrou permet de rendre solidaire chaque montant 101 d'un téton 90, grâce au passage par exemple d'un axe fileté dans des alésages alignés formés dans le montant 101 et le téton 90.

Bien entendu, les moyens de fixation 90 peuvent être quelconques.

De préférence, ces fixations 90 sont disposées aux quatre coins de la cabine sensiblement rectangulaire.

Comme représenté aux figures 11 et 12, la cabine 100 est constituée de deux parties sensiblement symétriques 100a et 100b, chaque partie comportant deux montants 101 adaptés à être fixés par les moyens de fixation 90 aux profilés externes 13.

Un montant provisoire 102 est également prévu sur la face avant de chaque portion de cabine 100a et 100b, à l'emplacement de la porte 105. Ces montants 102 sont ensuite supprimés lorsque les deux parties identiques 100a et 100b de la cabine sont réunies suivant l'axe médian longitudinal de la cabine 100.

La partie de cabine 100a illustrée à la figure 12 comporte une face arrière plane 109 et correspond à un exemple de réalisation dans lequel les rails 70 ne traversent pas la cabine 100.

Par contre, si les rails 70 traversent la cabine 100, la face arrière 109 de chaque partie de cabine 100a et 100b est semblable à la face avant et peut comporter également un montant provisoire 102.

Afin de faciliter le transport, les montants 101, 102 et éventuellement la face arrière 109 sont repliables sous la partie supérieure formant toit de chaque partie 100a et 100b de cabine.

Les parois latérales, les portes 105 pour le passage du chariot 107 et les portes 106 pour l'entrée de l'opérateur viennent se fixer ensuite sur la structure fixée aux profilés externes 13.

L'ensemble de la cabine 100 est rendu étanche grâce à un bardage deux peaux de ces parois.

Dans la partie supérieure de la cabine 100, un caisson 108 permet d'abriter différents dispositifs tels que lampes, aérateurs...

La cabine cellulaire illustrée à la figure 5 comprend en outre une cellule technique 80 dans laquelle débouche la portion d'extrémité de sortie 31 du second châssis de raclage 30, au niveau du pied d'un élévateur 40.

La matière granuleuse transférée peut ainsi être recyclée dans cette cellule technique 80. Cette dernière abrite également une armoire électrique 83 qui intègre les dispositifs de commande et de protection nécessaires au fonctionnement de l'ensemble de la cabine cellulaire.

Une zone 82 peut également être prévue pour stocker du sable ou de la grenaille à l'intérieur de cette cellule technique 80.

Un caisson étanche 85 est adapté à recouvrir la portion d'extrémité de sortie 31 du second châssis de raclage 30 s'étendant entre l'ouverture 104 de la cabine 100 et la cellule technique 80, afin de protéger le second châssis 30 des intempéries extérieures.

Ce caisson 85 joue également un rôle d'entretoise lors du montage de l'ensemble de décapage selon l'invention.

Des moyens de fixation 84 permettent de relier la cellule technique 80, à proximité de son toit, à la cabine 100, grâce à des attaches 103 disposées sur une face latérale de la cabine 100, sensiblement au-dessus de l'ouverture 104 du passage du second châssis de raclage 30. Ces fixations 84 permettent d'arrimer la cellule technique 80 à la cellule 100.

Bien entendu, l'invention n'est pas limitée à l'exemple de réalisation ci-dessus et de nombreuses modifications peuvent être apportées à celui-ci sans sortir du cadre de l'invention.

Ainsi, des châssis de raclage longitudinaux 10, 20 peuvent alimenter par les deux côtés le châssis de raclage transversal 30, les racleurs coudés 14 possédant alors deux secondes parties 51b d'armature, solidaires des extrémités de la première partie 51a située sensiblement au milieu du châssis de raclage 30.

Une autre cabine 100 est alors disposée, à la suite de la première cabine 100, de manière à recouvrir les autres châssis longitudinaux 10, 20 disposés symétriquement aux premiers par rapport au châssis de raclage transversal 30.

## Revendications

1. Racleur (14) disposé entre deux longerons parallèles (12), comprenant une armature métallique (51) en forme de peigne à dents (52) dirigées vers le bas et une lame flexible (59) couvrant lesdites dents (52) et collée contre une face d'une traverse supérieure (62) de l'armature (51), caractérisé en ce que l'armature métallique (51) possède une première partie (51a) sensiblement perpendiculaire auxdits longerons (12) et au moins une seconde partie (51b) solidaire d'une extrémité de la première partie (51a) et formant un coude avec la première partie (51a), la lame flexible (59) étant collée contre une face dirigée vers l'intérieur dudit coude de l'armature (51).

2. Racleur conforme à la revendication 1, caractérisé en ce que lesdites première (51a) et seconde (51b) parties de l'armature métallique (51) forment un angle (α) obtus.

3. Racleur conforme à l'une des revendications 1 ou 2, caractérisé en ce que la seconde partie (51b) de l'armature (51) possède une aile (54) solidaire de son extrémité opposée à ladite première partie (51a), ladite aile (54) étant parallèle aux longerons (12) et s'étendant au-delà de la lame flexible (59).

4. Racleur conforme à l'une des revendications 1 à 3, caractérisé en ce que les première (51a) et seconde (5lb) parties de l'armature (51) sont en contact dans un plan vertical (58) situé entre deux dents (52) du peigne.

5. Racleur conforme à l'une des revendications 1 à 4, caractérisé en ce que l'armature métallique (51) en forme de peigne possède des dents (52, 53) à ses extrémités.

6. Racleur conforme à l'une des revendications 1 à 5, caractérisé en ce que l'armature métallique (51) possède en outre une aile raidisseuse (60) sensiblement perpendiculaire à la traverse supérieure (62) et s'étendant au-dessus du bord de la lame flexible (59) adjacent à la traverse supérieure de l'armature.

7. Racleur conforme à la revendication 6, caractérisé en ce que l'aile raidisseuse (60) possède des moyens de fixation (57) aux longerons parallèles (12).

8. Racleur conforme à l'une des revendications 1 à 7, caractérisé en ce que lesdites première (51a) et seconde (51b) parties de l'armature (51) forment un angle (α) de 150° environ.

9. Châssis de raclage (30) comprenant deux longerons parallèles (12) entre lesquels sont disposés des racleurs (14) conformes à l'une des revendications 1 à 8, et animés d'un mouvement de va-et-vient, les matières à transférer étant introduites latéralement dans ledit châssis de raclage (30), sous au moins un des longerons (12), caractérisé en ce que la seconde partie (51b) de l'armature coudée (51) de chaque racleur (14) est adjacente au longeron (12) sous lequel les matières à transférer sont introduites, la face dirigée vers l'intérieur dudit coude de l'armature (51) étant en regard de l'extrémité (31) de sortie des matières dudit châssis (30).

10. Installation de transfert de matières, notamment de matières de décapage granuleuses ou pulvérulentes, comprenant une première série de châssis parallèles de raclage (10, 20) comportant deux longerons parallèles (12), animés d'un mouvement de va-et-vient et entre lesquels sont disposés transversalement des racleurs droits (11, 15), et un second châssis de raclage (30) conforme à la revendication 9, caractérisé en ce que les châssis de raclage (10, 20) de ladite première série débouchent latéralement au niveau du second châssis de raclage (30), les racleurs droits (11, 15) de la première série de châssis de raclage (10, 20) possédant une armature métallique droite en forme de peigne à dents dirigées vers le bas, une lame flexible (59) couvrant lesdites dents et collée sur une face d'une traverse supérieure de l'armature et une aile raidisseuse (60) sensiblement perpendiculaire à la traverse supérieure et s'étendant à l'opposé de la lame flexible (59) dans les racleurs d'extrémité (15) disposés en regard du second châssis de raclage (30).

11. Installation conforme à la revendication 10, caractérisée en ce que le second châssis de raclage (30) débouche au niveau du pied d'un élévateur (40) et possède en outre à une portion d'extrémité de sortie (31) des matières, une série de racleurs droits (16, 17) comportant une armature métallique en forme de peigne à dents dirigées vers le bas, une lame flexible (59) couvrant lesdites dents et collée contre une face de la traverse supérieure de l'armature, et une aile raidisseuse (60) sensiblement perpendiculaire à la traverse supérieure.

12. Installation conforme à la revendication 11, caractérisée en ce que le racleur d'extrémité (17), situé à l'extrémité (31a) de la portion d'extrémité de sortie (31) des matières du second châssis de raclage (30), possède une aile raidisseuse (60) s'étendant à l'opposé de la lame flexible (59) et en ce que l'armature (51) dudit racleur d'extrémité (17) comprend à ses extrémités deux ailes (61) parallèles aux longerons (12) et s'étendant au-delà de la lame flexible (59).

13. Cabine cellulaire déplaçable comprenant une installation de transfert de matières, conforme à l'une des revendications 10 à 12, les châssis de raclage (10, 20) de ladite première série et ledit second châssis de raclage (30) comportant des profilés (13) externes immobiles entre lesquels s'étendent parallèlement lesdits longerons (12), caractérisé en ce que lesdits profilés externes (13) comportent des moyens de fixation (90) adaptés à fixer de manière libérable une cabine (100) s'étendant au-dessus desdits châssis de raclage (10, 20, 30), ladite cabine (100) comportant une ouverture (104) adaptée au passage d'une portion d'extrémité de sortie (31) du second châssis de raclage (30).

14. Cabine cellulaire conforme à la revendication 13, caractérisé en ce qu'il comporte au moins une paire de rails sensiblement parallèles aux longerons (12) de la première série de châssis de raclage (10, 20) et adaptés à supporter en translation un dispositif formant support d'un produit à traiter dans ledit ensemble de décapage.

15. Cabine cellulaire conforme à la revendication 14, caractérisé en ce qu'un profilé de support (73) s'étend parallèlement entre lesdits longerons (12) de chaque châssis de raclage (10, 20) de ladite première série, ledit profilé de support (73) étant adapté à supporter un rail, et en ce que des racleurs droits (11a, 11b) s'étendent de manière transversale respectivement entre un profilé externe (13) et ledit profilé de support (73) et entre l'autre profilé externe (13) et le profilé de support (73).

16. Cabine cellulaire conforme à l'une des revendications 13 à 15, caractérisé en ce que la cabine (100) est constituée de deux parties sensiblement symétriques (100a, 100b), chaque partie (100a, 100b) comportant deux montants (101) adaptés à être fixés par lesdits moyens de fixation (90) aux profilés externes (13).

17. Cabine cellulaire conforme à l'une des revendications 13 à 16, caractérisé en ce qu'il comprend en outre une cellule technique (80) dans laquelle débouche la portion d'extrémité de sortie (31) du second châssis de raclage (30), au niveau du pied d'un élévateur (40).

18. Cabine cellulaire conforme à la revendication 17, caractérisé en ce qu'un caisson étanche (85) est adapté à recouvrir ladite portion d'extrémité de sortie (31) dudit second châssis de raclage (30) s'étendant entre l'ouverture (104) de la cabine (100) et la cellule technique (80).

## Patentansprüche

1. Zwischen zwei parallelen Längsträgern (12) angeordneter Abstreifer (14) mit einer Metallbewehrung (51) in Form eines Kamms mit nach unten gerichteten Zähnen (52) und einem flexiblen Blatt (59), das besagte Zähne (52) bedeckt und auf eine Seite einer oberen Traverse (62) der Bewehrung (51) geklebt ist, dadurch gekennzeichnet, daß die Metallbewehrung (51) einen ersten Teil (51a) besitzt, der im wesentlichen senkrecht zu den besagten Längsträgern (12) verläuft und mindestens einen zweiten Teil (51b) besitzt, der mit dem Ende des ersten Teils (51a) fest verbunden ist und einen Winkel mit dem ersten Teil (51a) bildet, wobei das flexible Blatt (59) auf eine in das Innere des besagten Winkels der Bewehrung (51) gerichtete Fläche geklebt ist.

2. Abstreifer nach Anspruch 1, dadurch gekennzeichnet, daß die beiden ersten (51a) und zweiten (51b) Teile der Metallbewehrung (51) einen stumpfen Winkel (α) bilden.

3. Abstreifer nach einem der Ansprüche 1 oder 2, dadurch gekennzeichnet, daß der zweite Teil (51b) der Bewehrung (51) einen Flügel (54) besitzt, der mit dem dem ersten Teil (51a) gegenüberliegenden Ende fest verbunden ist, wobei dieser Flügel (54) parallel zu den Längsträgern (12) ist und über das flexible Blatt (59) hinausreicht.

4. Abstreifer nach einem der Ansprüche 1 bis 3, dadurch gekennzeichnet, daß die ersten (51a) und zweiten (51b) Teile der Bewehrung (51) auf einer senkrechten Fläche (58), die sich zwischen zwei Zähnen (52) des Kamms befindet, in Berühung sind.

5. Abstreifer nach einem der Ansprüche 1 bis 4, dadurch gekennzeichnet, daß die Metallbewehrung (51) in Form eines Kamms an ihren Enden Zähne (52, 53) besitzt.

6. Abstreifer nach einem der Ansprüche 1 bis 5, dadurch gekennzeichnet, daß die Metallbewehrung (51) außerdem einen Aussteifungsflügel (60) besitzt, der im wesentlichen senkrecht zur oberen Traverse (62) verläuft und bis über den an die obere Traverse der Bewehrung anstoßenden Rand des flexiblen Blattes (59) hinausreicht.

7. Abstreifer gemäß Anspruch 6, dadurch gekennzeichnet, daß der Aussteifungsflügel (60) an den parallelen Längsträgern (12) Befestigungsmittel (57) aufweist.

8. Abstreifer gemäß einem der Ansprüche 1 bis 7, dadurch gekennzeichnet, daß die ersten (51a) und zweiten (51b) Teile der Bewehrung (51) einen Winkel (α) von ca. 150° bilden.

9. Abstreifergestell (30) mit zwei parallelen Längsträgern (12), zwischen welchen Abstreifer (14) nach einem der Ansprüche 1 bis 8 angeordnet sind, die durch eine Hin- und Herbewegung angetrieben werden, wobei die zu übertragenden Materialien seitlich unter mindestens einem der Längsträger (12) in dieses Abstreifergestell (30) eingegeben werden, dadurch gekennzeichnet, daß ein zweiter Teil (51b) der gekrümmten Bewehrung (51) jedes Abstreifers (14) an den Längsträger (12) anstößt, unter welchem die zu übertragenden Materialien eingegeben werden, wobei die zum Inneren dieser Krümmung der Bewehrung (51) gerichtete Seite sich vor dem Ende (31) des Materialausgangs dieses Gestells (30) befindet.

10. Materialtransferanlage, insbesondere für körnige oder pulverige Beizmittel, mit einer ersten Reihe paralleler Abstreifergestelle (10, 20) mit zwei parallelen Längsträgern (12), die durch eine Hin- und Herbewegung angetrieben werden und zwischen welchen die geraden Abstreifer (11, 15) quer angeordnet sind, und einem zweiten Abstreifergestell (30) nach Anspruch 9, dadurch gekennzeichnet, daß die Abstreifergestelle (10, 20) dieser ersten Reihe seitlich in die Ebene des zweiten Abstreifergestells (30) münden, wobei die geraden Abstreifer (11, 15) der ersten Abstreifergestellreihe (10, 20) eine gerade Metallbewehrung in Form eines Kamms mit nach unten gerichteten Zähnen, ein flexibles Blatt (59), das diese Zähne bedeckt und auf eine Seite einer oberen Traverse der Bewehrung geklebt ist und einen Aussteifungsflügel (50), der im wesentlichen senkrecht zur oberen Traverse verläuft und sich gegenüber dem flexiblen Blatt (59) in den vor dem zweiten Abstreifergestell (30) angeordneten Endabstreifern (15) befindet, besitzt.

11. Anlage nach Anspruch 10, dadurch gekennzeichnet, daß das zweite Abstreifergestell (30) in die Ebene des Fußes eines Elevators (40) mündet und außerdem an einem Materialausgangsendabschnitt (31) eine Reihe gerader Abstreifer (16, 17) mit einer Metallbewehrung in Form eines Kamms mit nach unten gerichteten Zähnen, ein diese Zähne bedeckendes und auf eine Seite der oberen Traverse der Bewehrung geklebtes flexibles Blatt (59) und einen Aussteifungsflügel (60), der im wesentlichen senkrecht zur oberen Traverse verläuft, besitzt.

12. Anlage nach Anspruch 11, dadurch gekennzeichnet, daß der Endabstreifer (17), der sich am Ende (31a) des Materialausgangsendabschnitts (31) befindet, einen Aussteifungsflügel (60) besitzt, der sich gegenüber dem flexiblen Blatt (59) befindet, und daß die Bewehrung (1) dieses Endabstreifers (17) an ihren Enden zwei zu den Längsträgern (12) parallele Flügel (61) aufweist, die über das flexible Blatt (59) hinausreichen.

13. Zellförmige versetzbare Kabine mit einer Materialtransferanlage nach einem der Ansprüche 10 bis 12, wobei die Abstreifergestelle (10, 20) dieser ersten Reihe und das zweite Abstreifergestell (30) äußere unbewegliche Profile (13) enthalten, zwischen welchen die Längsträger (12) parallel angeordnet sind, dadurch gekennzeichnet, daß die äußeren Profile (13) Befestigungsmittel (90) für die lösbare Befestigung einer Kabine (100) enthalten, die über die Abstreifergestelle (10, 20, 30) hinausreichen, wobei diese Kabine (100) eine öffnung (104) für die Durchführung eines Ausgangsendabschnitts (31) des zweiten Abstreifergestells (30) enthält.

14. Zellförmige Kabine nach Anspruch 13, dadurch gekennzeichnet, daß sie mindestens ein Paar Schienen aufweist, die im wesentlichen parallel zu den Längsträgern (12) der ersten Abstreifergestellreihe (10, 20) verlaufen und sich für die Translationsaufnahme einer Vorrichtung eignen, die als Träger eines in dieser Beizanlage zu behandelnden Produkts dient.

15. Zellförmige Kabine nach Anspruch 14, dadurch gekennzeichnet, daß ein Trägerprofil (73) parallel zwischen diesen Längsträgern (12) eines jeden Abstreifergestells (10, 20) dieser ersten Reihe verläuft, wobei dieses Trägerprofil (73) für die Aufnahme einer Schiene dient, und daß die geraden Abstreifer (11a, 11b) jeweils quer zwischen einem äußeren Profil (13) und dem Trägerprofil (73) und dem anderen äußeren Profil (13) und dem Trägerprofil (73) verlaufen.

16. Zellförmige Kabine nach einem der Ansprüche 13 bis 15, dadurch gekennzeichnet, daß die Kabine (100) aus den beiden im wesentlichen symmetrischen Teilen (100a, 100b) gebildet ist, wobei jedes Teil (100a, 100b) zwei Stützen (101) aufweist, die mit diesen Befestigungsmitteln (90) an den äußeren Profilen (13) befestigt werden können.

17. Zellförmige Kabine nach einem der Ansprüche 13 bis 16, dadurch gekennzeichnet, daß sie außerdem in Ebene des Fußes eines Elevators (40) eine technische Zelle (80) enthält, in welche der Ausgangsendabschnitt (31) des zweiten Abstreifergestells (30) mündet.

18. Zellförmige Kabine nach Anspruch 17, dadurch gekennzeichnet, daß ein dichter Kasten (85) zur Uberdeckung dieses Ausgangsendabschnitts (31) des zweiten Abstreifergestells (30), der sich zwischen der Öffnung (104) der Kabine (100) und der technischen Zelle (80) befindet, geeignet ist.

## Claims

1. A scraper (14) arranged between two parallel girders (12), comprising a metal truss (51) in the shape of a comb whose teeth (52) are directed downwards and a flexible blade (59) covering said teeth (52) and glued against one face of an upper crossbar (62) of the truss (51), characterised in that the metal truss (51) has a first part (51a) substantially perpendicular to said girders (12) and at least one second part (51b) joined to one end of the first part (51a) and forming an elbow with the first part (51a), the flexible blade (59) being glued against one face directed towards the interior of said elbow of the truss (51).

2. A scraper according to claim 1, characterised in that said first (51a) and second (51b) parts of the metal truss (51) form an obtuse angle (α).

3. A scraper according to one of claims 1 or 2, characterised in that the second part (51b) of the truss (51) has a flange (54) joined to its end opposite to said first part (51a), said flange (54) being parallel to the girders (12) and extending beyond the flexible blade (59).

4. A scraper according to one of claims 1 to 3, characterised in that the first (51a) and second (51b) parts of the truss (51) are in contact on a vertical plane (58) located between two teeth (52) of the comb.

5. A scraper according to one of claims 1 to 4, characterised in that the metal truss (51) in the shape of a comb has teeth (52, 53) at its ends.

6. A scraper according to one of claims 1 to 5, characterised in that the metal truss (51) also has a stiffening flange (60) which is substantially perpendicular to the upper crossbar (62) and extends over the edge of the flexible blade (59) adjacent to the upper crossbar of the truss.

7. A scraper according to claim 6, characterised in that the stiffening flange (60) has fixing means (57) fixing it to the parallel girders (12).

8. A scraper according to one of claims 1 to 7, characterised in that said first (51a) and second (51b) parts of the truss (51) form an obtuse angle (α) of approximately 150°.

9. A scraping framework (30) comprising two parallel girders (12) between which are arranged scrapers (14) in accordance with one of claims 1 to 8, performing a back-and-forth movement, the materials to be transferred being introduced laterally into said scraping framework (30), beneath at least one of the girders (12), characterised in that a second part (51b) of the elbowed truss (51) of each scraper (14) is adjacent to the girder (12) beneath which the materials to be transferred are introduced, with the face directed towards the interior of said elbow of the truss (51) facing the materials discharge end (31) of said framework (30).

10. An installation for the transfer of materials, in particular granular or pulverulent blasting materials, comprising a first series of parallel scraping frameworks (10, 20) including two parallel girders (12) which perform a back-and-forth movement and between which straight scrapers (11, 15) are arranged transversally, and a second scraping framework (30) in accordance with claim 9, characterised in that the scraping frameworks (10, 20) of said first series open laterally into the second scraping framework (30), the straight scrapers (11, 15) of the first series of scraping frameworks (10, 20) having a straight metal truss in the shape of a comb whose teeth are directed downwards, a flexible blade (59) covering said teeth and glued to one face of an upper crossbar of the truss, and a stiffening flange (60) substantially perpendicular to the upper crossbar and extending opposite to the flexible blade (59) in the end scrapers (15) arranged facing the second scraping framework (30).

11. An installation according to claim 10, characterised in that the second scraping framework (30) opens into the base of an elevator (40) and also has a materials discharge end portion (31), a series of straight scrapers (16, 17) including a metal truss in the shape of a comb with its teeth directed downwards, a flexible blade (59) covering said teeth and glued against one face of the upper crossbar of the truss, and a stiffening flange (60) substantially perpendicular to the upper crossbar.

12. An installation according to claim 11, characterised in that the end scraper (17), located at the end (31a) of the materials discharge end portion (31) of the second scraping framework (30), has a stiffening flange (60) extending opposite to the flexible blade (59) and in that the truss (51) of said end scraper (17) comprises at its ends two flanges (61) parallel to the girders (12) and extending beyond the flexible blade (59).

13. A moveable cellular booth comprising a materials transfer installation according to one of claims 10 to 12, the scraping frameworks (10, 20) of said first series and said second scraping framework (30) including fixed external sections (13) between which said girders (12) extend parallel to one another, characterised in that said external sections (13) include fixing means (90) suited to fix in a releasable manner said booth (100) extending above said scraping frameworks (10, 20, 30), said booth (100) including an opening (104) suited for the passage of a discharge end portion (31) of the second scraping framework (30).

14. A cellular booth according to claim 13, characterised in that it includes at least one pair of rails substantially parallel to the girders (12) of the first series of scraping frameworks (10, 20) and suited to support in translation a device forming the support of a product to be treated in said blasting assembly.

15. A cellular booth according to claim 14, characterised in that a supporting section (73) extends parallel to and between said girders (12) of each scraping framework (10, 20) of said first series, said supporting section (73) being suited to support a rail, and in that straight scrapers (11a, 11b) extend in a transversal manner between an external section (13) and said supporting section (73) and between the other external section (13) and the supporting section (73), respectively.

16. A cellular booth according to one of claims 13 to 15, characterised in that the booth (100) is made up of two substantially symmetrical parts (100a, 100b), each part (100a, 100b) including two uprights (101) suited to be fixed to the external sections (13) by said fixing means (90).

17. A cellular booth according to one of claims 13 to 16, characterised in that it further comprises a technical cell (80) into which opens the discharge end portion (31) of the second scraping framework (30), at the base of an elevator (40).

18. A cellular booth according to claim 17, characterised in that a sealed coffer (85) is suited to cover said discharge end portion (31) of said second scraping framework (30) extending between the opening (104) of the booth (100) and the preparation cell (80).
